# NEUE EUROPÄISCHE PATENTSCHRIFT

(11) **EP 2 287 053 B2**
(45) Veröffentlichungstag und Bekanntmachung des Hinweises auf die Entscheidung über den Einspruch: **28.12.2022**
(45) Hinweis auf die Patenterteilung: 13.05.2015
(21) Anmeldenummer: 10167962.9
(22) Anmeldetag: 30.06.2010
(51) Int. Cl.: B60S 3/04, B08B 1/02

(54) **Vorrichtung zur Reinigung von Fahrzeugrädern**
Device for cleaning vehicle wheels
Dispositif de nettoyage de roues de véhicule

(30) Priorität: 17.08.2009 DE 102009037772
(43) Veröffentlichungstag der Anmeldung: 23.02.2011
(73) Patentinhaber: WashTec Holding GmbH, 86153 Augsburg (DE)
(72) Erfinder: Keusch, Siegfried, 73779, Deizisau (DE)
(74) Vertreter: Reitstötter Kinzebach

(56) Entgegenhaltungen:
- EP-A1- 2 077 211
- EP-A2- 1 561 658
- DE-A1- 3 740 627
- DE-A1-102004 060 859

## Beschreibung

Die Erfindung betrifft eine Vorrichtung zur Reinigung von Fahrzeugrädern nach dem Oberbegriff des Anspruchs 1.

Bisher bekannte Vorrichtungen zur Reinigung von Fahrzeugrädern weisen in der Regel eine z.B. als Tellerbürste ausgeführte Radwaschbürste auf, die einen mit Hilfe eines Antriebsmotors rotatorisch angetriebenen Bürstenkörper mit stirnseitig angeordneten Reinigungsborsten zur Anlage an einem Fahrzeugrad enthält. Bei derartigen Radwaschbürsten sind jedoch die Bewegungsmöglichkeiten begrenzt, so dass auch deren Wirkungsbereich entsprechend beschränkt ist.

DE-A-102004060859 offenbart den Oberbegriff des Anspruchs 1.

Aufgabe der Erfindung ist es, eine Vorrichtung der eingangs genannten Art zu schaffen, die eine verbesserte Reinigung der Fahrzeugräder ermöglicht.

Diese Aufgabe wird durch eine Vorrichtung mit den Merkmalen des Anspruchs 1 gelöst. Zweckmäßige Ausgestaltungen und vorteilhafte Weiterbildungen der Erfindung sind in den Unteransprüchen angegeben.

Bei der erfindungsgemäßen Vorrichtung weist der durch einen Antriebsmotor um eine Zentralachse rotatorisch angetriebene und mit Reinigungselementen in Art einer Felgenwaschbürste bestückte Drehkörper mindestens einen mit weiteren Reinigungselementen versehenen Drehteller auf, der durch die Drehung des Drehkörpers nicht nur um die Zentralachse, sondern über ein Getriebe auch um seine eigene Längsachse gedreht wird. Auf diese Weise können z.B. innerhalb des eine Hauptbürste bildenden Drehkörpers eine oder mehrere Innenbürsten angeordnet werden, die sich mit einer dem Antriebmotor entsprechenden Drehzahl auf einer Kreisbahn um die Mittelachse des Drehkörpers und zusätzlich mit einer anderen Drehzahl um ihre eigene Achse drehen. Dadurch ist eine verbesserte Überdeckung der zu reinigenden Flächen und damit eine verbesserte Reinigungswirkung erreichbar.

Innerhalb des Drehkörpers können eine oder mehrere Drehteller mit Innenbürsten oder anderen Reinigungselementen angeordnet sein. Die mechanische Kopplung der Bürsten bewirkt, dass die äußere Bürste eine Rotation um die Zentralachse ausführt und die innere Bürste oder Bürsten sowohl eine Drehbewegung um die Zentralachse als auch eine Drehung um ihren eigenen Mittelpunkt ausführen.

Innerhalb des um die Zentralachse rotierenden Drehkörpers können ein oder mehrere Drehteller angeordnet sein, wobei in einer zweckmäßigen Ausführung z.B. drei um die Zentralachse des Drehkörpers gleichwinklig verteilte Drehteller vorgesehen sind.

In einer besonders zweckmäßigen Ausführung kann die Drehung der Drehscheiben ebenfalls durch den Antriebsmotor über ein z.B. als Planetengetriebe ausgeführtes Übersetzungsgetriebe erfolgen. Durch das Übersetzungsgetriebe können die Drehscheiben mit einer vom Drehkörper unterschiedlichen Drehzahl angetrieben werden, wodurch sich eine verbesserte Reinigungswirkung ergibt. Die mehreren Drehteller mit den daran angeordneten, vorzugsweise bürstenförmigen Reinigungselementen, müssen auch nicht die gleiche Drehzahl haben, d.h. sowohl der Durchmesser als auch die Drehzahl kann unterschiedlich sein, was zu günstigen Überlagerungseffekten für die Felgenwäsche führt.

In einer kompakten Bauweise sind die Drehteller in entsprechenden Öffnungen einer Deckplatte des Drehkörpers angeordnet.

Eine weitere vorteilhafte Ausgestaltung zeichnet sich dadurch aus, dass in den Drehkörper eine Einrichtung zur Zuführung eines Reinigungsfluids integriert ist. Diese Einrichtung kann Zuführleitungen und eine Drehdurchführung für die Überleitung des zweckmäßigerweise unter Hochdruck zugeführten Reinigungsfluids von einem stationären Teil in den rotierenden Drehkörper umfassen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein erstes Ausführungsbeispiel einer erfindungsgemäßen Vorrichtung zur Reinigung von Fahrzeugrädern in einer Perspektive;
- **Figur 2**: die in Figur 1 gezeigte Vorrichtung mit abgebautem Vorderteil;
- **Figur 3**: eine Vorderansicht der Vorrichtung von Figur 1,
- **Figur 4**: einen Längsschnitt der Vorrichtung von Figur 1 entlang der Linien A-A von Figur 3 und
- **Figur 5**: ein weiteres Ausführungsbeispiel einer Vorrichtung zur Reinigung von Fahrzeugrädern.

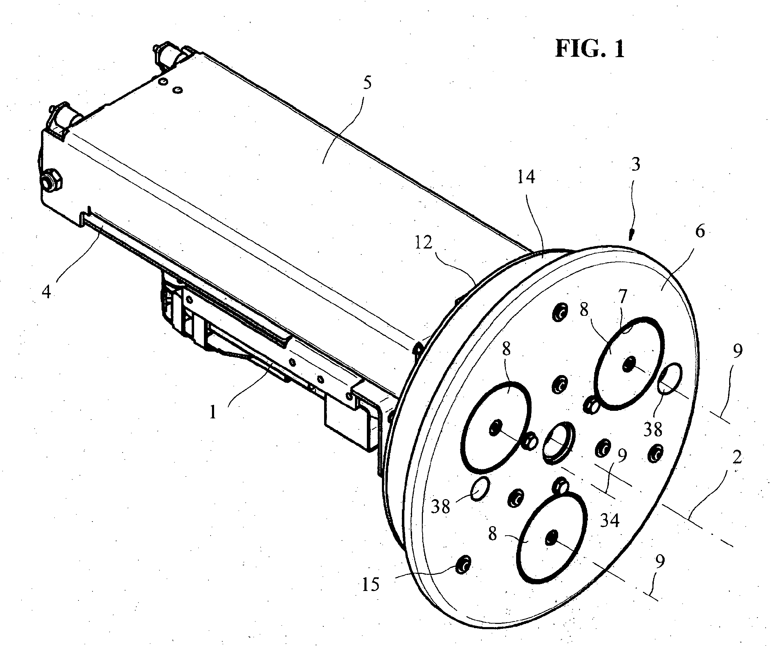

In den Figuren 1 bis 4 ist ein erstes Ausführungsbeispiel eines mittels eines Antriebsmotors 1 um eine Zentralachse 2 drehbaren Grundkörpers 3 einer Vorrichtung zur Reinigung von Fahrzeugrädern in einer Fahrzeugwaschanlage in unterschiedlichen Ansichten dargestellt. Die gezeigte Vorrichtung enthält einen über Linearführungen 4 verschiebbar geführten Schlitten 5, an dem der an die Größe der Fahrzeugfelgen angepasste scheibenförmige Grundkörper 3 durch einen nicht dargestellten Linearantrieb zwischen einer zurückgezogenen Ruhestellung und einer vorgeschobenen Reinigungsstellung verfahrbar ist.

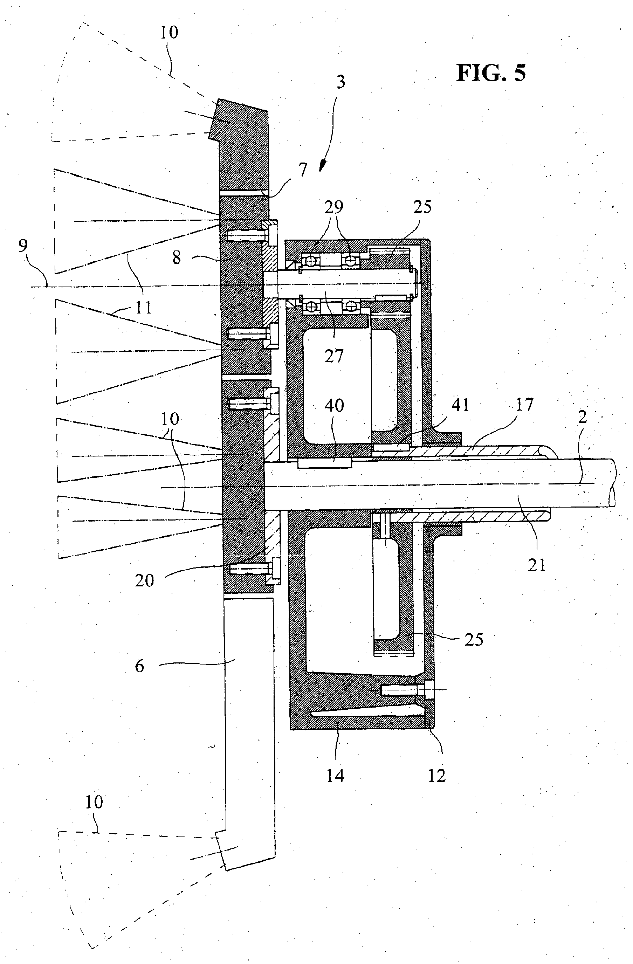

Wie aus Figur 1 hervorgeht, weist der hier mehrteilig ausgeführte Grundkörper 3 in einer vorderen Stirnplatte 6 drei kreisrunde Öffnungen 7 mit darin angeordneten Drehscheiben 8 auf. Die Drehscheiben 8 sind bei dem gezeigten Ausführungsbeispiel gleichwinklig beabstandet auf einem zur Zentralachse 2 konzentrischen Kreis angeordnet und werden bei der Drehung des Grundkörpers 3 durch den Antriebsmotor 1 nicht nur um die Zentralachse 8, sondern über ein im Folgenden noch näher erläutertes Getriebe auch um ihre eigenen Längsachsen 9 gedreht. Wie bei einer in Figur 5 im Querschnitt gezeigten weiteren Ausführung schematisch dargestellt ist, sind zur Reinigung von Fahrzeugrädern an der vorderen Stirnplatte 6 des um die Zentralachse 2 drehbaren Grundkörpers 3 borstenförmige Reinigungselemente 10 und an den vorderen Stirnflächen der um ihre eigenen Längsachsen 9 drehbaren Drehscheiben 8 weitere borstenartige Reinigungselemente 11 angebracht. Die hier als Reinigungsborsten ausgeführten Reinigungselemente 10 und 11 können direkt oder auch über separate Trägerelemente an der Stirnplatte 6 bzw. den Drehscheiben 8 befestigt sein.

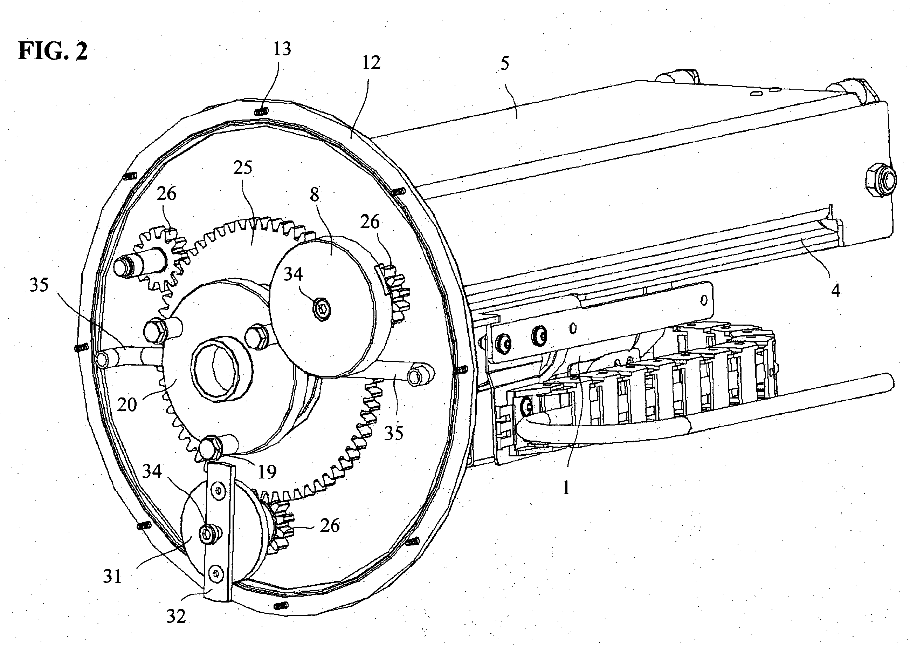

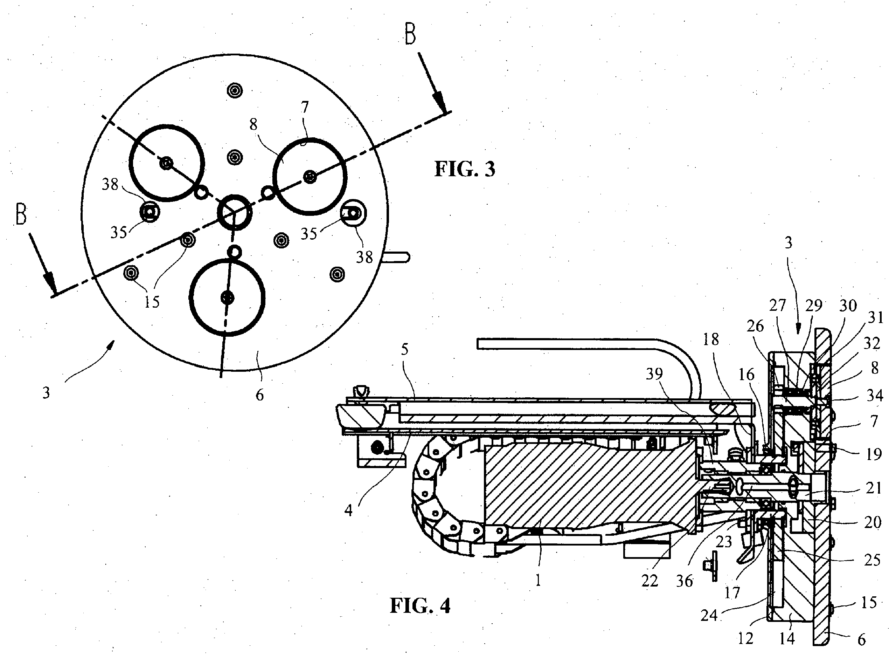

Aus der Schnittansicht von Figur 4 ist ersichtlich, dass der Grundkörper 3 bei der in Figur 1 gezeigten Ausführung aus einer hinteren Deckplatte 12, einem mit der Deckplatte 12 über die in Figur 2 gezeigten Stifte 13 verschraubten Zwischenteil 14 und der über Schrauben 15 mit dem Zwischenteil 14 verschraubten vorderen Stirnplatte 6 besteht. Die Deckplatte 12 ist über ein Lager 16 auf einer verdrehfesten Lagerbuchse 17 drehbar gelagert. Die Lagerbuchse 17 ist in einer nach unten abgewinkelten Lagerplatte 18 des Schlittens 5 verdrehfest fixiert. Die Stirnplatte 6 ist über Befestigungsschrauben 19 an der Stirnseite einer auch in Figur 2 erkennbaren Antriebsscheibe 20 befestigt. Die Antriebsscheibe 20 sitzt auf dem vorderen Ende einer Antriebswelle 21, deren hinteres Ende mit einer Motorwelle 22 des Antriebsmotors 1 verbunden ist. Die Antriebwelle 21 ist innerhalb der Lagerbuchse 17 über ein Lager 23 drehbar gelagert.

In dem Grundkörper 3 ist innerhalb einer Aussparung 24 zwischen der hinteren Deckplatte 12 und dem Zwischenteil 14 ein Planetengetriebe mit einem auch in Figur 2 dargestellten Sonnenrad 25 und drei auf dem Sonnenrad 25 abwälzenden Planetenrädern 26 untergebracht. Das Sonnenrad 25 ist verdrehfest auf der nicht drehbaren Lagerbuchse 17 fixiert. Die Planetenräder 26 sitzen auf dem zur Deckplatte 12 gewandten Ende von Wellen 27, die zu beiden Seiten vorstehend über in Figur 4 dargestellte Lager 29 in entsprechenden Bohrungen 30 des Zwischenteils 4 drehbar gelagert sind. Auf den zur vorderen Stirnplatte 14 gewandten anderen Enden der Wellen 27 sind Tragscheiben 31 mit darauf befestigten Antriebsstegen 32 fixiert. Auf die Antriebsstege 32 sind die mit entsprechenden Ausnehmungen 33 versehenen Drehscheiben 8 formschlüssig aufgesetzt und werden durch Schrauben 34 fixiert.

In Figur 2 ist erkennbar, dass innerhalb des Drehtellers 3 eine Reinigungsmittelzufiihrung mit einer Zuführleitung 35 enthält. Die Zuführleitung 35 enthält zwei radial nach außen verlaufende und an ihren Enden nach vorne abgewinkelten Rohrabschnitte 35, die diametral gegenüberliegend an der Antriebswelle 21 angeordnet sind und mit einem zentralen Zuführkanal 36 innerhalb der Antriebswelle 21 in Verbindung stehen. Die nach vorne abgewinkelten offenen Enden der Rohrabschnitte ragen in Bohrungen 38 der Stirnplatte 6, wie dies aus Figur 3 hervorgeht. Über eine in Figur 4 gezeigte Drehdurchführung 39 kann ein Reinigungsfluid unter Hochdruck über den zentralen Zuführkanal 36 zu den beiden Rohrabschnitten 35 und über diese zur Stirnseite des Grundkörpers 3 geleitet werden.

In Figur 5 ist ein weiteres Ausführungsbeispiel eines drehbaren Grundkörpers 3 einer Vorrichtung zur Reinigung von Fahrzeugrädern in einem Querschnitt gezeigt. Auch bei dieser Ausführung ist eine mit einer oder mehreren kreisrunden Öffnungen 7 versehene Stirnplatte 6 auf einer am vorderen Ende einer Antriebswelle 21 fest angeordneten Antriebsscheibe 20 befestigt. In der Öffnung 7 ist ein Drehteller 8 angeordnet, der am vorderen Ende einer innerhalb eines Zwischenstücks 14 drehbar gelagerten Welle 27 sitzt. An der Stirnseite der vorderen Stirnplatte 6 sind borstenförmige Reinigungselemente 10 und an den vorderen Stirnflächen der um ihre eigenen Längsachsen 9 drehbaren Drehscheiben 8 weitere borstenartige Reinigungselemente 11 angeordnet.

Das Zwischenstück 14 ist zur gemeinsamem Drehung mit der Stirnplatte 6 über eine Paßfeder 40 formschlüssig mit der Antriebswelle 21 verbunden. Bei der gezeigten Ausführung ist am vorderen Ende der Antriebswelle 21 ebenfalls eine Antriebsscheibe 20 befestigt, an der die Stirnplatte 6 festgeschraubt ist. Auf dem hinteren Ende der über Lager 29 innerhalb des Zwischenstücks 14 gelagerten Welle 27 sitzt ein Planetenrad 26, das mit einem innerhalb des Grundkörpers 3 verdrehfest angeordneten Sonnenrad 25 kämmt. Das Sonnenrad 25 ist über eine weitere Passfeder 41 gegen Verdrehung gesichert auf einer nicht drehbaren Lagerbuchse 17 angebracht. Die über der Antriebswelle 21 angeordnete Lagerbuchse 17 ragt hierzu in das Zwischenstück 14 des Grundkörpers 3 hinein. An der Rückseite des Zwischenstücks 14 ist eine hintere Deckplatte 12 aufgeschraubt, die auf der Lagerbuchse drehbar geführt ist. Auch bei dieser Ausführung wird durch Drehung der Deckplatte 6 mit Hilfe der Antriebswelle 21 der Drehteller 8 nicht nur um die Zentralachse sondern über das Planetengetriebe auch um seine Längsachse 9 gedreht.

## Patentansprüche

1. Vorrichtung zur Reinigung von Fahrzeugrädern, die einen um eine Zentralachse (2) drehbaren und durch einen Antriebsmotor (1) rotatorisch angetriebenen Drehkörper (3) mit stirnseitig angeordneten Reinigungselementen (10),welche eine äußere Bürste umfassen, enthält, **dadurch gekennzeichnet, dass** der Drehkörper (3) mindestens einen mit weiteren Reinigungselementen (11), die eine innere Bürste bilden, bestückten Drehteller (8) enthält, der durch die Drehung des Drehkörpers (3) nicht nur um die Zentralachse (2), sondern über ein Getriebe (25, 26) auch um seine eigene Längsachse (9) gedreht wird, so dass die äußere Bürste eine Rotation um die Zentralachse (2) ausführt und die innere Bürste oder Bürsten des Drehtellers (8) oder der Drehteller (8) sowohl eine Drehbewegung um die Zentralachse (2) als auch eine Drehung um ihren eigenen Mittelpunkt ausführen.

2. Vorrichtung nach Anspruch 1, **dadurch gekennzeichnet, dass** der oder jeder Drehteller (8) über das Getriebe (25, 26) mit einer zur Drehzahl der Drehkörpers (3) unterschiedlichen Drehzahl angetrieben wird.

3. Vorrichtung nach Anspruch 1 oder 2, **dadurch gekennzeichnet, dass** der oder jeder Drehteller (8) in einer entsprechenden Öffnung (7) einer Deckplatte (6) des Drehkörpers (3) angeordnet ist.

4. Vorrichtung nach einem der Ansprüche 1 bis 3, **dadurch gekennzeichnet, dass** der Drehkörper (3) fest mit einer durch den Antriebsmotor (1) drehbaren Antriebswelle (21) verbunden ist.

5. Vorrichtung nach einem der Ansprüche 1 bis 4, **dadurch gekennzeichnet, dass** das Getriebe (25, 26) als Planetengetriebe mit einem innerhalb des Drehkörpers (3) verdrehfest angeordneten Sonnenrad (25) und einem jedem Drehteller (8) zugeordneten Planetenrad (26) ausgebildet ist.

6. Vorrichtung nach Anspruch 5, **dadurch gekennzeichnet, dass** das Sonnenrad (25) auf einer in den Drehkörper (3) ragenden undrehbaren Lagerbuchse (17) sitzt.

7. Vorrichtung nach Anspruch 5 oder 6, **dadurch gekennzeichnet, dass** das Planetenrad (26) auf dem hinteren Ende einer über Lager (29) innerhalb des Drehkörpers (3) gelagerten Welle (27) sitzt.

8. Vorrichtung nach einem der Ansprüche 3 bis 7, **dadurch gekennzeichnet, dass** die Stirnplatte (6) auf einem Zwischenstück (14) befestigt ist.

9. Vorrichtung nach Anspruch 8, **dadurch gekennzeichnet, dass** das Zwischenstück (14) mit einer hinteren Deckplatte (12) verbunden ist.

10. Vorrichtung nach einem der Ansprüche 1 bis 9, **dadurch gekennzeichnet, dass** in dem Drehkörper (3) eine Reinigungsmittelzuführung (35, 36, 39) integriert ist.

11. Vorrichtung nach Anspruch 10, **dadurch gekennzeichnet, dass** die Reinigungsmittelzuführung (35, 36, 39) eine Zuführleitung (35) und eine Drehdurchführung (39) für die Zuführung des Reinigungsfluids über einen zentralen Zufuhrkanal (36) enthält.

12. Vorrichtung nach einem der Ansprüche 1 bis 11, **dadurch gekennzeichnet, dass** der Drehkörper (3) mehrere um die Zentralachse (2) verteilte Drehteller (8) enthält.

## Claims

1. Device for cleaning vehicle wheels which comprises a rotating body (3) which is rotatable about a central axis (2) and driven in rotation by a driving motor (1) and has cleaning elements (10) arranged on its face that comprises an outer brush, **characterised in that** the rotating body (3) comprises at least one rotating plate (8) which is fitted with further cleaning elements (11) that form an inner brush and through the rotation of the rotating body (3) is rotated not only about the central axis (2) but also about its own longitudinal axis (9) through a gear unit (25, 26) so that the outer brush carries out a rotation about the central axis (2) and the inner brush or brushes of the rotating plate (8) or the rotating plates (8) carry out both a rotational movement about the central axis (2) and a rotation about their own center.

2. Device according to claim 1, **characterised in that** the or each rotating plate (8) is driven through the gear unit (25, 26) with a rotational speed which is different to the rotational speed of the rotating body (3).

3. Device according to claim 1 or 2, **characterised in that** the or each rotating plate (8) is arranged in a corresponding opening (7) of a cover plate (6) of the rotating body (3).

4. Device according to one of claims 1 to 3, **characterised in that** the rotating body (3) is connected securely to a driving shaft (21) which can be rotated by the driving motor (1).

5. Device according to one of claims 1 to 4, **characterised in that** the gear unit (25, 26) is embodied as a planetary gear unit with a sun wheel (25) arranged so that it cannot turn inside the rotating body (3) and with a planetary gear (26) associated with each rotating plate (8).

6. Device according to claim 5, **characterised in that** the sun wheel (25) is seated on a bearing bush (17) which cannot be rotated and projects into the rotating body (3).

7. Device according to claim 5 or 6, **characterised in that** the planetary gear (26) is seated on the rear end of a shaft (27) mounted by means of bearings (29) inside the rotating body (3).

8. Device according to one of claims 3 to 7, **characterised in that** the end plate (6) is fastened on an intermediate element (14).

9. Device according to claim 8, **characterised in that** the intermediate element (14) is connected to a rear cover plate (12).

10. Device according to one of claims 1 to 9, **characterised in that** a cleaning agent feed system (35, 36, 39) is integrated in the rotating body (3).

11. Device according to claim 10, **characterised in that** the cleaning agent feed system (35, 36, 39) comprises a feed line (35) and a rotating lead-through (39) for feeding the cleaning fluid through a central feed channel (36).

12. Device according to one of claims 1 to 11, **characterised in that** the rotating body (3) comprises a plurality of rotating plates (8) distributed around the central axis (2).

## Revendications

1. Dispositif de nettoyage de roues de véhicule qui contient un corps de rotation (3) entraîné en rotation par un moteur d'entraînement (1) et pouvant tourner autour d'un axe central (2) avec des éléments de nettoyage (10), dont une brosse extérieure, agencés côté avant, **caractérisé en ce que** le corps de rotation (3) contient au moins un plateau tournant (8) équipé d'autres éléments de nettoyage (11), constituant une brosse intérieure, qui est tourné par la rotation du corps de rotation (3) non seulement autour de l'axe central (2) mais par le biais d'un engrenage (25, 26) également autour de son propre axe longitudinal (9), si bien que la brosse extérieure effectue une rotation autour de l'axe central (2) et la ou les brosses intérieures du ou des plateaux tournants (8) effectuent une révolution autour de l'axe central (2) ainsi qu'une rotation sur leur propre centre.

2. Dispositif selon revendication 1, **caractérisé en ce que** le ou chaque plateau tournant (8) est entraîné par le biais de l'engrenage (25, 26) à une vitesse de rotation différente de la vitesse de rotation du corps de rotation (3).

3. Dispositif selon la revendication 1 ou 2, **caractérisé en ce que** le ou chaque plateau tournant (8) est agencé dans une ouverture correspondante (7) d'une plaque de recouvrement (6) du corps de rotation (3).

4. Dispositif selon l'une quelconque des revendications 1 à 3, **caractérisé en ce que** le corps de rotation (3) est fixement relié à un arbre d'entraînement (21) rotatif par moteur d'entraînement (1).

5. Dispositif selon l'une quelconque des revendications 1 à 4, **caractérisé en ce que** l'engrenage (25, 26) est réalisé comme un engrenage planétaire avec une roue solaire (25) agencée de manière à ne pouvoir tourner dans le corps de rotation (3) et une roue planétaire (26) associée à chaque plateau tournant (8).

6. Dispositif selon la revendication 5, **caractérisé en ce que** la roue solaire (25) loge sur un coussinet (17) non rotatif s'élevant dans le corps de rotation (3).

7. Dispositif selon la revendication 5 ou 6, **caractérisé en ce que** la roue planétaire (26) repose sur l'extrémité arrière d'un arbre (27) logé par des paliers (29) dans le corps de rotation (3).

8. Dispositif selon l'une quelconque des revendications 3 à 7, **caractérisé en ce que** la plaque avant (6) est fixée sur une pièce intermédiaire (14).

9. Dispositif selon la revendication 8, **caractérisé en ce que** la pièce intermédiaire (14) est reliée à une plaque de recouvrement arrière (12).

10. Dispositif selon l'une quelconque des revendications 1 à 9, **caractérisé en ce qu'**une amenée d'agent de nettoyage (35, 36, 39) est intégrée dans le corps de rotation (3).

11. Dispositif selon la revendication 10, **caractérisé en ce que** l'amenée d'agent de nettoyage (35, 36, 39) contient une conduite d'amenée (35) et un passage rotatif (39) pour fournir le fluide de nettoyage par un canal d'amenée (36) central.

12. Dispositif selon l'une quelconque des revendications 1 à 11, **caractérisé en ce que** le corps de rotation (3) contient plusieurs plateaux tournants (8) répartis autour de l'axe central (2).
